Europäisches Patentamt

European Patent Office

Office européen des brevets

(19)

(11) **EP 0 392 159 B1**

(12) **EUROPEAN PATENT SPECIFICATION**

(45) Date of publication and mention
of the grant of the patent:
**30.10.1996 Bulletin 1996/44**

(51) Int Cl.⁶: **G06K 9/64**, G06K 9/00

(21) Application number: **90102809.2**

(22) Date of filing: **13.02.1990**

(54) **Signature verification method**

Unterschriftenprüfungsverfahren

Méthode de vérification de signatures

(84) Designated Contracting States:
**AT CH DE ES FR GB IT LI NL SE**

(30) Priority: **10.04.1989 JP 90443/89**

(43) Date of publication of application:
**17.10.1990 Bulletin 1990/42**

(73) Proprietor: **CADIX INC.**
**Tokyo 154 (JP)**

(72) Inventor: **Muroya, Masami**
**Tokyo 158 (JP)**

(74) Representative: **Heim, Hans-Karl, Dipl.-Ing. et al**
**Weber & Heim**
**Patentanwälte**
**Irmgardstrasse 3**
**81479 München (DE)**

(56) References cited:
**US-A- 4 040 010**

• **PROC. OF THE 6TH INTERN. CONF. ON**
**PATTERN RECOGNITION vol. 2, 19 October**
**1982, MUNICH, DE pages 823 - 825; Y. SATO ET**
**AL.: 'Online signature verification based on**
**Shape, Motion, and Writing pressure'**

**Description**

Field of the Invention

The present invention relates to a signature verification method, and more particularly to a signature verification method by which a time axis distortion function is obtained from a registered pattern and an input pattern by the use of dynamic programming matching, and the input signature can be distinguished to be a true signature or a forgery/a false with high degree of accuracy.

Description of the Prior Art

Signatures are prevailingly used in any field of industries. Especially in Europe, signatures are frequently used in from the case of approving of documents to that of checking of checks or credit cards. It is, therefore, necessary to discriminate accurately a genuine signature from false signatures. Previously, this could only be done by a visual examination, but it is now possible to use electronic means to verify the authenticity of a signature by a technique recognized as a pattern of electrical signals comparing with a registration pattern that has been stored in the system previously. Verification based on such pattern recognition can provide a considerable improvement of the accuracy when using a signature to identify a true person. This verification method contributes much to enlarge the field of its applications.

Signature verification was disclosed as part of the online method handwritten character identification described in Japanese Laid-open Patent Application 62-287387 and in Proceedings of the 6th International Conference on Pattern Recognition, vol.2, 19 October 1982, Munich, DE, Pages 823-825, by the same author, which has been used to delimit claim 1. In the method disclosed, dynamic programming matching is used to obtain a distortion function between a registration pattern (hereinafter referred to as "a registered true pattern") and an input signature pattern. Furthermore, in this prior art, a method which utilizes writing pressure information as well as coordinate information is revealed. As such, this prior art could provide highly accurate signature verification.

Thus, information about the difference related to coordinate and writing pressure between a registered true pattern and an input pattern is used in the prior art. The problem of the prior art is in that the rate of recognizing a true person and the rate of rejecting other persons cannot be improved at the time of recognition.

It is extremely difficult to meet the requirements to improve said two types of rates at one time. Because signature patterns have some dispersion in their distributions on a two-dimensional distribution map, so that a distribution of a true signature and that of a false signature inevitably overlap each other. Consequently, the prior art had difficulty in providing a sufficient recognition rate which was credible enough for practical use by using the information of difference degrees with respect to a coordinate value and a writing pressure value.

A signature counterfeiter can forge a shape of a signature, but cannot imitate a writing movement and a writing pressure of a true signer. Another problem of the prior art was that forged signatures were not completely rejected, what was worse, those signatures resembled only on the shape of a true signature were recognized as valid.

Further, in the prior art, a signature classified in a boundary area, at which a true signature and a false signature coexisted, was forcibly judged as either true or false. As such, in case of giving importance to a discrimination rate when verifying in practical occasions, the prior art caused a trouble that a true signature is discriminated to be a fake. Therefore, in the case of finance business, the signature verification system was hard to be put into practical use.

The object of the present invention is to provide a novel method for comparing and verifying between a registered pattern and an input pattern, and this method facilitates to satisfy in improving an recognition rate of a true signature and a rejection rate of a forgery/a false at the same time.

Further object of the present invention is to provide a verification method which prevents a trouble in an area, at which there is an overlap between a distribution of an recognition rate of a true signature and a rejection rate of a forged/a false signature, by setting up a boundary area in which a signature, whose authenticity is unidentifiable for the verification system, is classified.

Summary of the Invention

To achieve the above two objects, the present invention comprises the steps recited in claim 1. As a general overview the method according to the invention comprises two stages :

a first stage for obtaining discrepancies on shape as a first degree of difference; and
a second stage for obtaining cumulative values of non-linearity level relating to a time distortion function between a registered true pattern and an input pattern to be verified, said values obtained as a second degree of difference which represents dissimilarities of writing movement. Thereby, a signature is distinguished to be a true or a forgery/a false signature by the use of said two degrees of differences in two-dimensional arrangement.

The present invention also includes at least three types of settled area on a two-dimensional distribution map with respect to the degree of difference:

a forgery signature area in which an input pattern intentionally imitated to the registered true pattern is classified;
a genuine signature area in which an input pattern belonging to the individual settled area two-dimensionally remote from the forgery signature area is classified;
a false signature area in which an input pattern belonging to neither of the above-mentioned two areas is classified.

In the present invention, said false signature area further includes a boundary area in which a signature hardly distinguishable to be a true or a false is classified, thereby giving an output showing the degree how the input pattern resembles the registered true signature.

Thus, according to the present invention, the signature verification is performed with two-dimensional arrangement by the use of the information related to dissimilarities of shape and writing movement, both of which are obtained from a temporal series of the coordinate and pressure values of a pen between an input pattern and a registered pattern, thereby an recognition rate of a true signature and an elimination rate of a forgery can be remarkably improved, because imitating a writing movement is hardly practicable for a counterfeiter compared to forging a shape of the registered signature.

Also, the present invention enables the forgery imitated the registered true pattern to be eliminated completely.

Further, according to the present invention, a trouble, which is caused by an input pattern classified in a boundary area overlapping the true signature area and the false signature area, can be prevented by providing an output showing the degree how the input pattern resembles the registered true signature.

Further features of the invention, its nature and various advantages will be more apparent from the accompanying drawings and the following detailed description of the invention.

Brief Description of the Drawings

Figure 1 is a flow chart diagram showing the preferred embodiments of signature verification according to the present invention;
Figure 2 is an explanatory diagram of a registered pattern and an input pattern;
Figure 3 is an explanatory diagram of a time axis distortion function ;
Figure 4 shows another example of the time axis distortion function according to the present invention;
Figure 5 shows a two-dimensional distribution of difference according to the present invention;

Description of the Preferred Embodiments

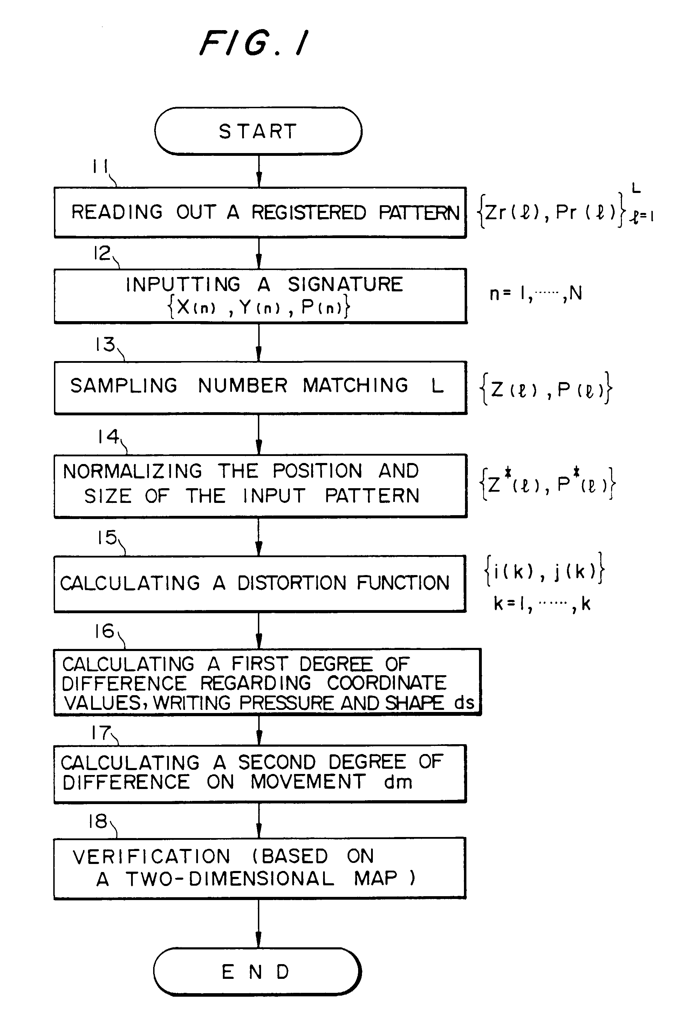

Figure 1 is a schematic illustration of various steps of a signature verification method according to the present invention.

A step 11 is a stage for reading out a registered true pattern from a memory. A registered true pattern is previously written by a true signer, and is converted into the form of three-dimensional time series data relating to a coordinate and a writing pressure sampled at equal intervals of time, and then such converted data is recorded in the form of electrical signals after being normalized on the shape and size of the written true pattern.

A step 12 is a stage for reading a signature in the form of electrical information with a digitizer. Whenever a signature verification becomes necessary, a pattern written by a signer to be identified is read into the form of three-dimensional time series information as electrical signals relating to the coordinate and writing pressure as the same way the registration of a true pattern.

Steps 13 and 14 are stages for preliminary normalization. In the step 13, the number of data included in the input pattern is made equivalent to that of the registered pattern, thereby matching the sampling number of the input pattern to that of the registered pattern.

Step 14 is a stage for normalizing the location and size of the input pattern on an input board every time on which a signature is written down. Through the above steps, i.e., the step of data number matching and the step of normalizing the size and location, the input pattern is converted into an appropriate form of data which can be compared to the registered pattern.

Step 15 is a calculation stage of a distortion function between the registered pattern and an input pattern. In this step, a time distortion function which minimizes a cumulative error between the input pattern and the registered pattern by a dynamic programming matching technique is obtained.

Step 16 is a stage for calculating a degree of difference on shape between the registered pattern and the input pattern as a first degree of difference. In the present invention, the first degree of difference is obtained by performing a correction on the duration for writing an input pattern, thereby comparing this corrected input pattern with the registered pattern.

Step 17 is a calculation stage at which a cumulative degree of difference, which arises in the time axis distortion function itself, is calculated as a second degree of difference showing a degree of difference on writing movement.

In step 18, the input pattern is then distinguished to be a true or a forgery/a false in the form of a two-dimensional discrimination function on a map which is predetermined based on the first degree of difference on shape and the second degree of difference on writing movement. The brief summary of the verification processes are mentioned below.

Firstly, a degree of difference with respect to the shape of a signature is compared between an input pattern and the registered pattern after a normalization of the input pattern is completed. This normalization, as mentioned in the step 16, minimizes a cumulative error of coordinate and writing pressure along the time axis between the registered pattern and the input pattern.

Next, a degree of difference with respect to writing movement of the input pattern is obtained by a time distortion function employing a second degree of difference which characterizes this invention. Then, the input pattern is compared to the registered pattern based on the degree of difference on writing movement.

Therefore, according to the present invention, a signature verification with high accuracy of recognition rate and rejection rate will be obtainable by the use of a two-dimensional map on which said both degrees of differences distribute.

Following are the further detail of said steps for the embodiments.

A registered pattern read out from the memory in the step 11 is the pattern that a true signer has previously registered his/her autograph as a true signature. A coordinate information $z=( x , y )$ and a writing pressure information "p" of the registered pattern are consecutively read in the form of electrical signals, and then they are stored as a registered true pattern. The coordinate "z" and the writing pressure "p" thereon are preferably obtained by averaging a plurality of signatures, so that the accurate characteristics of the signature are well reflected. The registered pattern is then represented by the three-dimensional time series data with the number of sample points "L", the coordinate information "z", and the writing pressure information "p" as follows:

$$\{Zr\ (l),\ Pr\ (l)\ \}_{l=1}^{L}\ .$$

Thus, registered pattern is read out from the memory, but it is desirable to update the registered pattern to meet with a newest true signature as any variation arises in the true signer.

An input pattern, in the step 12, consists of signals being electrically converted from a signature written by a person to be verified. The pattern is represented as a time series data sampled at equal intervals of time including a coordinate information $\{x(n), y(n)\}$ and a writing pressure information $\{p(n)\}$, combined in $\{x(n), y(n), p(n)\}$. Here, "n" denotes the number of sample point beginning from 1 through N.

A normalization of the input pattern is represented in the form of complex equation with respect to the coordinate data and the writing pressure data of the input pattern, respectively in the following.

Explanations regarding normalization steps are as below.

Initially, information with respect to three-dimensional time series along tke time axis, or an arc axis, is normalized, and the position and size of an input pattern are normalized.

Particularly, with respect to the complex coordinate data shown as;

$$z(l)=x(l) + iy(l)$$

$$l=1,2, \dots ,L,$$

where $i= \sqrt{-1}$, the next equation is derived by normalizing the sample number "N" to be "L".
Here a new complex series

$$z_1(l) = \frac{Z(l) - Zg}{\|Z(l) - Zg\|}$$

$$l = 1,2, \dots . L$$

is determined for a preliminary normalization. Here, Zg depicts the centroid of the input pattern, defined as

$$zg = \frac{1}{L}\sum_{l=1}^{L}z \quad (1)$$

Also, the symbolic $\|*\|$ represents the complex coordinate norm, and it is defined as

$$\|z(1)\|^2 = \frac{1}{L}\sum_{l=1}^{L}|z(1)|^2$$

The real part of coordinate value tends to increase with time, because most people write signatures from the left to the right. This component of constant movement will be an undesirable factor for the verification, and must be eliminated as follows:

The component of constant movement is defined as,

$$z_2(l) = \xi \cdot \frac{(l-1)}{L} + n$$

Therefore, the coordinate series $z^*$, whose component of constant movement is removed, is defined as

$$z^*(l) = z_1(l) - z_2(l)$$

$$l = l,\dots \dots, L$$

Here, the constants $\xi$ and $\eta$ are selected to minimize $\|z^*(l)\|$, thereby defined as

$$\xi = \frac{12}{L}\sum_{l=1}^{L}z_1(l) \cdot (l-l)$$

$$\eta = -\xi/2$$

The complex valued series $Z^*(l)$ obtained from the aforementioned normalization operations represents normalized complex coordinate series, which will be simply referred hereinafter as "coordinate series".

Similarly, concerning the writing pressure information, an amplitude is normalized as follows:

$$p^*(l) = \frac{p(l)}{\|p(l)\|}$$

Thereafter, the time axis distortion function, which serves to reduce cumulative errors to the minimum, is applied to both the registered pattern and the input pattern by using the dynamic programming matching technique. Thereby, normalization is performed on both the registered pattern and the input pattern along the time axis.

Finally, a degree of difference is obtained by comparing the two normalized patterns each other; the normalized registration pattern and the normalized input pattern. Described more in detail, the degree of difference is prepared by the steps of:

obtaining a time axis distortion function between the registered pattern and an input pattern in the step 15; obtaining a degree of difference in shape between the registered pattern and an input pattern on the basis of the aligned time axis by means of the time axis distortion function in the step 16, resulting in reducing a cumulative error in minimum; whereby a degree of difference with respect to the shape of the input pattern is obtained.

This time axis distortion function is employed for matching signatures in case of verification as a method of optimizing a multi-stage determination process by the use of dynamic programming matching.

Also, according to the preferred embodiments, the coordinate information and the writing pressure information are simultaneously processed by applying a predetermined weighting to the respective of information through this dynamic programming matching process.

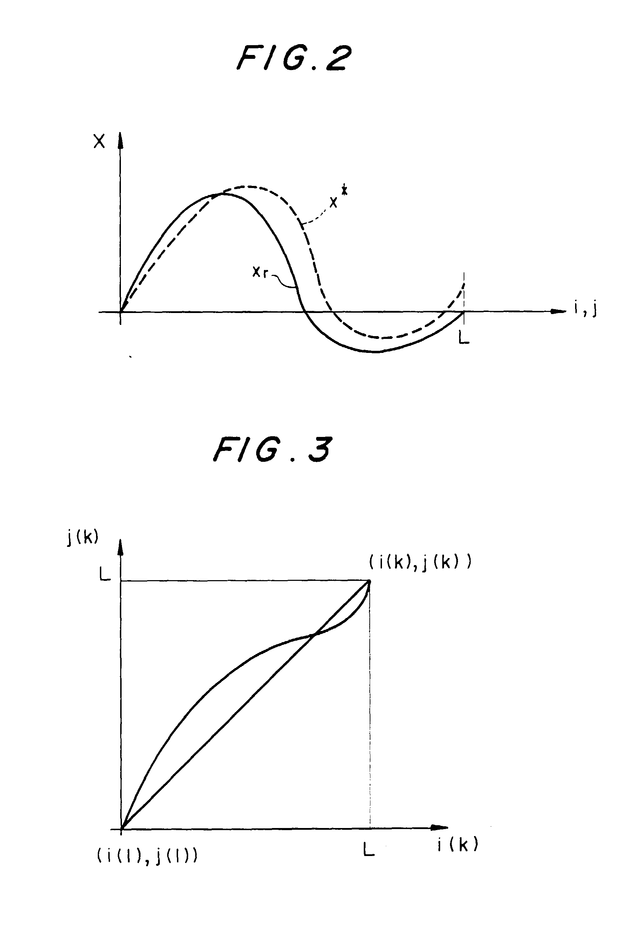

In Figure 2, the degree of difference "d" between the ith point of the registered pattern $Xr = \{Zr(i), Pr(i)\}_{i=1}^{L}$ and the

jth point of an input pattern $X^* = \{Z^*(j), P(j)\}_{j=1}^{L}$ are expressed as follows with the coordinate series and writing pressure series obtained by said preliminary normalization.

$$d^2(i, j) = (I - w^p)\left|z_r(i) - z^*(j)\right|^2$$

$$+ w_p\left|p_r(i) - p^*(j)\right|^2$$

$$i, j = I, ..., L$$

Here, Wp ($0 \leq$ Wp $\leq I$) is a weight to be applied to the writing pressure series and (I-Wp) is a weight to be applied to the coordinate series.

Accordingly, a function "d" is inactive with respect to the writing pressure series when a weight applied to the writing pressure is "Wp=0", and only depends on the pen coordinates, which is equivalent to treating the character pattern as a single stroke. When the weight applied to the writing pressure is "Wp=I", the function "d" depends only on the writing pressure, and as such means that the shape of the character will be ignored in the recognition process.

Therefore, according to this embodiment, it becomes possible to apply the dynamic programming matching to both the coordinate series and the writing pressure series through a common calculation method by setting a specific value for a weighting coefficient.

In consideration of the non-linear conversion between the axes of patterns A (registered true pattern) and B (input pattern), based on the dynamic programming matching concept, an error thereof is defined as follows:

$$ds^2(A, B) =$$
$$\frac{1}{2L}\min_{i,j}\sum_{k=1}^{K}d^2\{i(k), j(k)\}\Delta l(k)$$
$$\Delta l(k) = \left|i(k) - j(k-1)\right| + \left|j(k) - j(k-1)\right|$$

The equation provides an optimum value based on the non-linear axial expansion/contraction. The following conditions are set to the time axis distortion function {i(1), j(1)} which represents the non-linear conversion.

(1) Monotonicity:     That is, based on the assumption that usually a writer will not change the stroke order of his/her signature, the time axis distortion function will be a function increasing monotonically.

$$i(k-1) \leq i(k), j(k-1) \leq j(k)$$

$$\left|i(k) - i(k-1)\right| + \left|j(k) - j(k-1)\right| \geq 1$$

(2) Continuity:     That is, with respect to the continuous stroke-to-stroke coordinate and writing pressure variations, the time axis distortion function has to be a continuous function.

$$\left|i(k) - i(k-1)\right| \leq 1, \left|j(k) - j(k-1)\right| \leq 1$$

(3) Boundary conditions: That is, in this embodiment the starting and ending points of an input pattern are fixed, for which the boundary conditions are set as follows.

$$i(1) = j(1) = 1, i(k) = j(k) = L$$

A figure 3 shows an example of the time axis distortion function obtained by the use of the dynamic programming matching. When both two patterns are perfectly identical, there will be zero error at each sampling point, in this case the time axis distortion function itself will coincide with a line which has a proprotional contstant 1, that is, the diagonal line in Figure 3.

However, in general, there will be non-linear type of errors between two patterns due to a temporal fluctuation.

When those errors are normalized by dynamic programming matching as shown in the Figure 3, a time axis distortion function is obtained, the function having an deviation to each side of the sampling points along the diagonal line.

Thus, once the time axis distortion function is obtained, a degree of difference is obtained by performing a pattern matching which minimizes the cumulative errors between the normalized coordinate information and the writing pressure information along the time axis.

In the step 16, a degree of difference "ds" (A, B), between the registered pattern and the input pattern, can be obtained as a first degree of difference which represents a difference, including the writing pressure information, with respect to the shape of the input signature.

After the degree of difference relating to the shape of the input signature is obtained as a first degree of difference "ds", then, a second degree of difference "dm" which represents a difference of writing movement is obtained in the step 17.

This second degree of difference "dm" can be defined in accordance with a degree of deviation from the diagonal of the time axis distortion function.

For example, defined as

$$dm = \|i(k) - j(k)\|$$

here

$$\|i(k)-j(k)\|^2 = \frac{1}{K} \sum_{k=1}^{K} |i(j)-h(j)|^2$$

That is, the second degree of difference "dm" denotes a degree of correction along the time axis and a degree of difference with respect to the writing movement as well.

Though the second degree of difference is obtained from the deviation of the time axis distortion function along the diagonal line in this embodiment, it is possible to apply another appropriate method to obtain the second degree of difference.

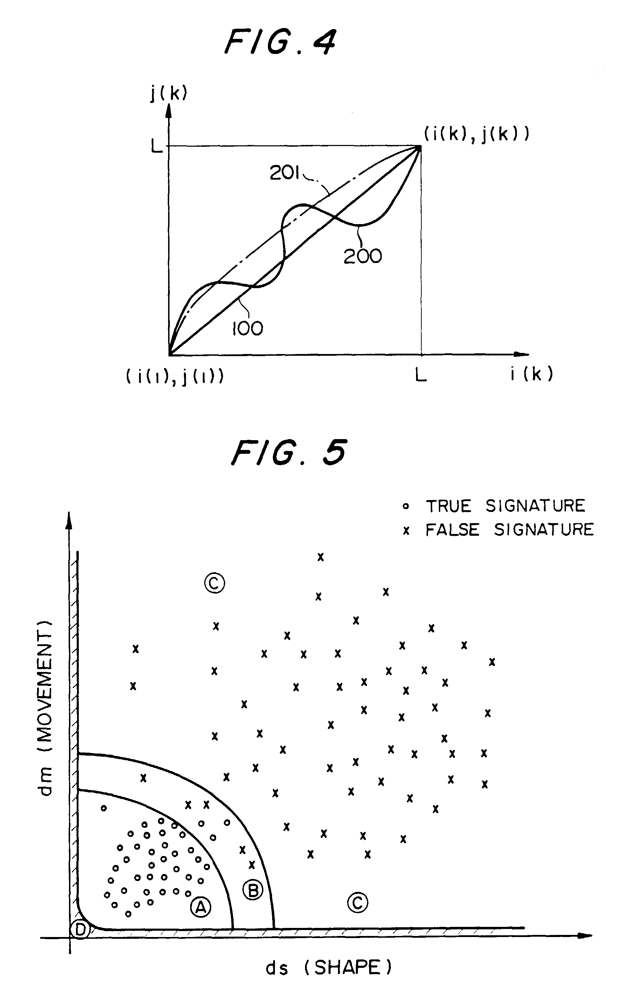

For example, in the case of a forged signature, the time axis distortion function shows a tendency to deviate to each side far off from the diagonal line. That deviation is shown in Figure 4 as a deviation of the time axis distortion function 200 along the diagonal line 100.

Therefore, it is possible to define a degree of difference on writing movement based on this deviation.

The Figure 4 shows two different types of time axis distortion functions as 200 and 201, respectively.

Also, as can be seen from the Figure 4, while the time axis distortion function 201 has a less deviation off from the diagonal line 100, the time axis distortion function 200 has a more deviation.

In other words, variations arose in the beginning stage of writing movement in the case of 201, whereas in the case of 200, variations incessantly occurred through the whole process of writing. Accordingly, it can be said that the forged signature has a tendency to show a characteristic; a wide deviation to each side off from the diagonal line, whereby a degree of difference regarding to a writing movement can be distinguished.

After both the first and second degrees of differences are obtained in the manner mentioned above, those differences are accordingly represented as a point on a two-dimensional map and classified based on a predetermined reference value in the step 18. The input signature is distinguished to be a true, a false, or a forgery consequently. In this preferred embodiment of the invention, a setting of the areas; a forgery signature area, a genuine signature area, a false signature area and a boundary signature area, is decided on the basis of information read out from a two-dimensional map.

In Figure 5, a lateral axis shows a first degree of difference "ds" which represents a degree of difference with respect to shape, and a longitudinal axis shows a second degree of difference "dm" which depicts a degree of difference with respect to a writing movement.

From the above explanations, it can be understood that the number of signatures recognized as true will decrease, while that of signatures rejected as false will increase proportionally, if the degree of difference on both axes increases.

In the Figure 5, four areas, such as A, B, C and D, are settled upon a two-dimensional map on a basis of an arbitrary discriminant function.

An area "A" is a genuine signature area. When a signature written by a person to be verified is classified into the area "A", the person is recognized as a true signer. If both two types of differences; a first degree of difference "ds" and a second degree of difference "dm", which are obtained by the foregoing judgment process belonging to the genuine signature area, and then the input pattern is acknowledged as a genuine virtual signature. The area "C" is a false signature area in which if at least one of the two differences shows significantly large value, the input pattern is then judged as a false signature.

Thus, according to the present invention, a signature is distinguished to be a true or a false signature by two-dimensional arrangement of both degrees of difference, whereby the rate of verifying a true signer, the rate of rejecting a false or a forgery can be remarkably improved.

Also, in the present invention, an area for a forgery is set in proximate to each of two axes as an area D. An input pattern of a signature, classified in this area, has a characteristic that one of two differences of the input pattern has extremely resembles to that of the registered pattern compared to a case of a pattern classified in a true signature area.

In general, it never occurs that an input signature extraordinarily resembles to the registered pattern with respect to either of the two differences; a movement or a shape. If a pattern shows the above-mentioned characteristics, this pattern will be rejected as a signature to be classified in a forgery signature area. With the help of this area D, or a forgery area, a conventional forgery imitated the registered pattern is rejected without fail, guaranteeing a full security.

More essential to the present invention is that a boundary area "B" is settled in between the genuine signature area "A" and the false signature area "C". In case a signature verification system cannot judge an input pattern to be a true or a false. A degree of difference will be calculated and outputted as a degree showing how the input signature resembles the registered true signature based on at least either of "ds" or "dm", i.e. a shape difference or a writing movement, or more preferably, based on both differences.

Therefore, a trouble which a true person is rejected duet to a fluctuation of his/her signature can surely be prevented by the use of an output of a degree showing how his/her signature resembles the registered true pattern.

As has been described in the above, according to the present invention, a remarkable improvement of the acknowledgment rate of a true signer and the rejection rate of a false signature are achieved when comparing an input signature pattern and a registered pattern.

Also, according to the present invention, when the input signature is verified by the two types of difference with respect to shape and writing movement, a forgery signature imitated a true signature can be securely rejected by setting a forgery signature area adding to the genuine signature area and the false signature area.

Further, the present invention has an advantage in providing a criterion of identification to the signature classified in the boundary area set in between the genuine signature area and the false signature area.

## Claims

1. A signature verification method for distinguishing a signature to be a true, a false or a forgery, comprising the steps of:

> a) storing coordinate and pressure values of a true pattern written by a true signer as a registered pattern;
> b) reading coordinate and pressure values of an input pattern written by a signer to be verified;
> c) normalizing the input pattern for the comparison with the registered pattern;
> d) calculating a time distortion function between the registered pattern and the input pattern by employing a dynamic programming matching process;
> e) correcting errors, with respect to time, to be a minimum by performing a time axis correction to the input pattern with the time distortion function;
> f) calculating a difference in shape between the corrected input pattern and the registered pattern as a first degree of difference;
> g) calculating a degree of non-linearity of the time distortion function as a second degree of difference with respect to writing movement that represents a cumulative error; characterised in that said method further comprises the steps of:
> h) verifying each signature by regarding it as a point in a two-dimensional map on which the calculated values of the first and second degrees of differences are distributed, whereby
>
> > h1) signatures in an area (A) with little difference in shape and movement with respect to the registered pattern are regarded as true;
> > h2) signatures in an area (C) with vast differences in shape or movement with respect to the registered pattern are regarded as false;
> > h3) signatures in an area (D) with very little difference in shape or movement with respect to the registered pattern are regarded as forgery.

2. A signature verification method according to claim 1, wherein the registered true pattern is composed of three-dimensional time series data including the coordinate value $Z_r(l)$ and the writing pressure value $P_r(l)$, the sampling data at a sampling point L of the registered true pattern being expressed in the following form:

$$\{z_r(l),\ p_r(l)\ \}_{l=1}^{L}$$

3. A signature verification method according to claim 1, wherein the registered true pattern is updated to meet with a newest true signature as any variation arises in the true signature.

4. A signature verification method according to claim 1, wherein the input pattern is composed of three-dimensional time series data including coordinate values "x", "y" and a writing pressure value "p", the sampling data at a sampling point, "n" = l through N, of the input pattern being expressed in the following form:

$$\{x(n),\ y(n),\ p(n)\}$$

5. A signature verification method according to claim 1, wherein said normalizing includes normalizing the number of sampling points (L, N) and normalizing the position and shape of the input pattern written on a signature input board.

6. A signature verification method according to claim 1, wherein a predetermined weight is applied to the time distortion function with respect to a coordinate value and a writing pressure value.

7. A signature verification method according to claim 1, wherein the false signature area (C) includes a boundary area (B) in which a signature hardly distinguishable to be a true signature or a false is classified, thereby giving an output showing the degree how the input signature resembles the registered true signature.

**Patentansprüche**

1. Unterschriftenprüfungsverfahren zum Unterscheiden einer Unterschrift als echt, falsch oder gefälscht, mit den Schritten:

a) Speichern von Koordinaten und Druckwerten eines richtigen Musters, welches von einem richtigen Unterschreibenden geschrieben ist, als registriertes Muster,
b) Lesen von Koordinaten und Druckwerten eines eingegebenen Musters, welches von einem zu überprüfenden Unterschreibenden geschrieben wird;
c) Normalisieren des eingegebenen Musters zum Vergleich mit dem registrierten Muster;
d) Berechnung einer Zeitverformungsfunktion zwischen dem registrierten Muster und dem Eingabemuster durch Anwendung eines dynamisch programmierbaren Anpassungsprozesses;
e) Korrektur von Fehlern bezüglich der Zeit auf ein Minimum durch Durchführen einer Zeitachsenkorrektur des Eingabemusters mit der Zeitverformungsfunktion;
f) Berechnen eines Formunterschiedes zwischen dem korrigierten Eingabemuster und dem registrierten Muster als einen ersten Unterschiedsgrad;
g) Berechnung eines Nichtlinearitätsgrads der Zeitverformungsfunktion als einen zweiten Unterschiedsgrad mit Bezug zur Schreibbewegung, die einen kumulativen Fehler darstellt:

**gekennzeichnet** dadurch,
daß die Methode weiterhin die Schritte aufweist:

h) Verifizierung jeder Unterschrift durch Betrachtung der Unterschrift als einen Punkt in einer zweidimensionalen Darstellung, in der die berechneten Werte des ersten und zweiten Unterschiedsgrads aufgetragen sind, wobei

h1) Unterschriften in einem Bereich (A) mit geringen Unterschieden in Form und Bewegung bezüglich des registrierten Musters als echt betrachtet werden;
h2) Unterschriften in einem Bereich (C) mit beträchtlichen Unterschieden in Form oder Bewegung bezüglich des registrierten Musters als falsch betrachtet werden;
h3) Unterschriften in einem Bereich (D) mit sehr geringem Unterschied in Form oder Bewegung bezüglich des registrierten Musters als gefälscht betrachtet werden.

**2.** Unterschriftenprüfungsverfahren nach Anspruch 1, wobei das registrierte echte Muster aus dreidimensionalen zeitlich aufeinanderfolgenden Daten mit dem Koordinatenwert $Z_r$ (l) und dem Schreibdruckwert $P_r$ (l) zusammengesetzt ist und die Probedaten an einem Probepunkt (L) des registrierten echten Musters in der folgenden Form ausgedrückt sind:

$$\{z_r(1), p_r(1)\} \begin{array}{c} L \\ l=1 \end{array}$$

**3.** Unterschriftenprüfungsverfahren nach Anspruch 1, wobei das registrierte echte Muster aktualisiert wird, um es in Übereinstimmung mit einer neuesten echten Unterschrift zu bringen, falls in der echten Unterschrift Variationen auftreten.

**4.** Unterschriftenprüfungsverfahren nach Anspruch 1, wobei das Eingabemuster aus dreidimensionalen zeitlich aufeinanderfolgenden Daten mit Koordinatenwerten "x", und "y" und einem Schreibdruckwert "p" zusammengesetzt ist und die Probedaten an einem Probepunkt, "n" = l bis N, des Eingabemusters in der folgenden Form ausgedrückt sind:

$$\{x(n), y(n), p(n)\}$$

**5.** Unterschriftenprüfungsverfahren nach Anspruch 1, wobei die Normalisierung eine Normalisierung der Anzahl der Probepunkte (L, N) und Normalisierung der Position und Form des Eingabemusters, welches auf ein Unterschrifteneingabefeld geschrieben wird, beinhaltet.

**6.** Unterschriftenprüfungsverfahren nach Anspruch 1, wobei eine vorgegebene Gewichtung auf die Zeitverformungsfunktion in Abhängigkeit von einem Koordinatenwert und einem Schreibdruckwert angewendet wird.

**7.** Unterschriftenprüfungsverfahren nach Anspruch 1, wobei der Bereich (C) der falschen Unterschrift einen Grenzbereich (B) aufweist, in welchem eine Unterschrift, die schwer als echte Unterschrift oder als eine falsche Unterschrift unterscheidbar ist, klassifiziert wird, wodurch eine eine Ausgabe abgegeben wird, die den Grad angibt, wie die eingegebene Unterschrift die registrierte echte Unterschrift wiedergibt.

**Revendications**

**1.** Procédé de vérification de signature pour distinguer une vraie signature d'une fausse ou d'une contrefaçon, comprenant les étapes de :

a) stockage de valeurs de coordonnée et de pression d'un motif vrai écrit par un vrai signataire en tant que motif enregistré ;
b) lecture de valeurs de coordonnée et de pression d'un motif d'entrée écrit par un signataire devant être vérifié ;
c) normalisation du motif d'entrée en vue de sa comparaison avec le motif enregistré ;
d) calcul d'une fonction de distorsion de temps entre le motif enregistré et le motif d'entrée en employant un procédé d'appariement par programmation dynamique;
e) correction d'erreurs, en fonction du temps, pour les rendre minimales en réalisant une correction d'axe de temps pour le motif d'entrée avec la fonction de distorsion de temps ;
f) calcul d'une différence de forme entre le motif d'entrée corrigé et le motif enregistré en tant que premier degré de différence ;
g) calcul d'un degré de non linéarité de la fonction de distorsion de temps en tant que deuxième degré de différence par rapport au mouvement d'écriture qui représente une erreur cumulative ; caractérisé en ce que ledit procédé comporte en outre les étapes de :
h) vérification de chaque signature en les considérant en tant qu'un point dans une carte bidimensionnelle sur laquelle les valeurs calculées des premier et deuxième degrés de différence sont distribuées, de sorte que

h1) des signatures dans une zone (A) avec de petites différences de forme et de mouvement par rapport au motif enregistré sont considérées comme vraies ;
h2) des signatures dans une zone (C) avec de grandes différences de forme ou de mouvement par rapport au motif enregistré sont considérées comme fausses;

h3) des signatures dans une zone (D) avec de très faibles différences de forme ou de mouvement par rapport au motif enregistré sont considérées comme des contrefaçons.

2. Procédé de vérification de signature selon la revendication 1, dans lequel le motif vrai enregistré est composé de données de série de temps tridimensionnelles comportant la valeur de coordonnée $Z_r(l)$ et la valeur de pression d'écriture $P_r(l)$, les données d'échantillonnage à un point d'échantillonnage (L) du motif vrai enregistré étant exprimées selon la forme suivante :

$$\{z_r(1), p_r(1)\}\,_{l=1}^{L}$$

3. Procédé de vérification de signature selon la revendication 1, dans lequel le motif vrai enregistré est mis à jour pour correspondre avec une signature vraie la plus récente en considérant toute variation se produisant dans la signature vraie.

4. Procédé de vérification de signature selon la revendication 1, dans lequel le motif d'entrée est composé de données de série de temps tridimensionnelles comportant des valeurs de coordonnées "x", "y" et une valeur de pression d'écriture "p", les données d'échantillonnage à un point d'échantillonnage, "n"=1 à N, du motif d'entrée exprimé selon la forme suivante :

$$\{x(n), y(n), p(n)\}$$

5. Procédé de vérification de signature selon la revendication 1, dans lequel ladite normalisation comporte une normalisation du nombre de points d'échantillonnage (L,N) et une normalisation de la position et de la forme du motif d'entrée écrit sur un tableau d'entrée de signature.

6. Procédé de vérification de signature selon la revendication 1, dans lequel une pondération prédéterminée est appliquée à la fonction de distorsion de temps en fonction d'une valeur de coordonnée et d'une valeur de pression d'écriture.

7. Procédé de vérification de signature selon la revendication 1, dans lequel la zone de signature fausse (C) comporte une zone limite (B) dans laquelle une vraie signature pouvant être difficilement distinguée d'une fausse est classifiée de manière à fournir une sortie montrant le degré de ressemblance de la signature d'entrée et de la signature vraie enregistrée.

# FIG. I

```
        ┌─────────────────────┐
        │       START         │
        └─────────────────────┘
                   │
    11             ▼
  ┌──────────────────────────────────────┐     L
  │  READING OUT A REGISTERED PATTERN     │   {Zr(ℓ), Pr(ℓ)}
  └──────────────────────────────────────┘              ℓ=1
                   │
    12             ▼
  ┌──────────────────────────────────────┐
  │       INPUTTING A SIGNATURE           │     n = 1, ......, N
  │        {X(n), Y(n), P(n)}             │
  └──────────────────────────────────────┘
                   │
    13             ▼
  ┌──────────────────────────────────────┐
  │    SAMPLING NUMBER MATCHING L         │   {Z(ℓ), P(ℓ)}
  └──────────────────────────────────────┘
                   │
    14             ▼
  ┌──────────────────────────────────────┐
  │   NORMALIZING THE POSITION AND        │   {Z*(ℓ), P*(ℓ)}
  │   SIZE OF THE INPUT PATTERN           │
  └──────────────────────────────────────┘
                   │
    15             ▼
  ┌──────────────────────────────────────┐   {i(k), j(k)}
  │  CALCULATING A DISTORTION FUNCTION    │
  └──────────────────────────────────────┘   k = 1, ......, k
                   │
    16             ▼
  ┌──────────────────────────────────────┐
  │  CALCULATING A FIRST DEGREE OF        │
  │  DIFFERENCE REGARDING COORDINATE      │
  │  VALUES, WRITING PRESSURE AND SHAPE ds│
  └──────────────────────────────────────┘
                   │
    17             ▼
  ┌──────────────────────────────────────┐
  │  CALCULATING A SECOND DEGREE OF       │
  │  DIFFERENCE ON MOVEMENT dm            │
  └──────────────────────────────────────┘
                   │
    18             ▼
  ┌──────────────────────────────────────┐
  │      VERIFICATION (BASED ON           │
  │       A TWO-DIMENSIONAL MAP )         │
  └──────────────────────────────────────┘
                   │
                   ▼
        ┌─────────────────────┐
        │        END          │
        └─────────────────────┘
```

# FIG. 2

# FIG. 3

# FIG. 4

# FIG. 5

○ TRUE SIGNATURE
× FALSE SIGNATURE